# EUROPÄISCHE PATENTSCHRIFT

(11) **EP 3 486 833 B1**
(45) Veröffentlichungstag und Bekanntmachung des Hinweises auf die Patenterteilung: **22.04.2020**
(21) Anmeldenummer: 18205049.2
(22) Anmeldetag: 08.11.2018
(51) Int. Cl.: G06K 7/10, G01S 17/02, G02B 5/10, G02B 26/10, G01S 7/481, G01S 17/42, G02B 26/12, G02B 5/09

(54) **POLYGONSCANNER UND VERFAHREN ZUM ERFASSEN VON OBJEKTEN IN EINEM ÜBERWACHUNGSBEREICH**
POLYGONAL SCANNER AND METHOD FOR DETECTING OBJECTS IN A SURVEILLANCE AREA
DISPOSITIF DE BALAYAGE POLYGONAL ET PROCÉDÉ DE DÉTECTION DES OBJETS DANS UNE ZONE DE SURVEILLANCE

(30) Priorität: 21.11.2017 DE 102017127420
(43) Veröffentlichungstag der Anmeldung: 22.05.2019
(73) Patentinhaber: SICK AG, 79183 Waldkirch (DE)
(72) Erfinder: Steinkogler, Sascha, 79106 Freiburg (DE); Schneider, Florian, 79276 Reute (DE); Weber, Helmut, 79312 Emmendingen (DE); Seitz, Stefan, 79341 Kenzingen (DE); Högy, Martin, 79271 St. Peter (DE)

(56) Entgegenhaltungen:
- EP-A2- 0 967 458
- EP-A2- 1 873 685
- DE-A1- 3 602 008
- DE-A1-102012 016 788
- US-A- 5 006 721

## Beschreibung

Die Erfindung betrifft einen Polygonscanner und ein Verfahren zum Erfassen von Objekten in einem Überwachungsbereich nach dem Oberbegriff von Anspruch 1 beziehungsweise 14.

Laserscanner werden für vielfältige Überwachungs- und Vermessungsaufgaben verwendet. Dazu wird eine Überwachungsebene mit einem Lichtstrahl abgetastet, der durch einen Drehspiegel abgelenkt wird, und das reflektierte Licht wird ausgewertet. In einem Polygonscanner weist der Drehspiegel mehrere Spiegelfacetten auf, so dass nur ein Teilausschnitt der Überwachungsebene erfasst wird, dieser aber mehrfach je Umdrehung entsprechend der Anzahl der Spiegelfacetten. Der Drehspiegel wird auch als Polygonspiegelrad oder kurz Polygonrad bezeichnet.

Eine mögliche Aufgabe eines Polygonscanners ist die bloße Objekterfassung. Um zudem Informationen über Objektabstände, Konturen oder Profile zu gewinnen, wird meist nicht nur die Anwesenheit von Objekten, sondern zugleich auch deren Entfernung bestimmt. Dazu wird die Lichtlaufzeit gemessen. Zwei Arten des Lichtlaufzeitverfahrens sind weit verbreitet. Bei phasenbasierten Verfahren moduliert der Lichtsender den Scanstrahl, und es wird die Phase zwischen einer Referenz und dem empfangenen Scanstrahl ermittelt. Pulsbasierte Verfahren prägen dem Scanstrahl ein signifikantes Muster auf, beispielsweise einen schmalen Puls von nur wenigen Nanosekunden Dauer und bestimmen den Empfangszeitpunkt dieses Musters. In einer als Pulsmittelungsverfahren bezeichneten Verallgemeinerung werden mehrere Pulse oder eine Pulsfolge ausgesandt und die empfangenen Pulse statistisch ausgewertet.

Das spezielle Aufbauprinzip eines Polygonscanners wird häufig in einem Barcodescanner verwendet, wo es vergleichsweise wenig Nachteile bedeutet, auf den typischen großen Erfassungswinkel von bis zu 360° eines Laserscanners mit nur einer Spiegelfläche zugunsten einer pro Umdrehung erhöhten Abtastrate durch mehrere Spiegelfacetten zu verzichten.

Ein Barcodescanner mit einem Polygonspiegelrad ist beispielsweise aus der EP 0 967 458 B1 bekannt. Dort wird außerdem eine Möglichkeit der Synchronisation angegeben, in welcher der jeweilige Beginn einer Abtastung durch eine Spiegelfacette mit einem Startsensor bestimmt wird. Dieser Startsensor müsste eigentlich im Bereich des Sendestrahls angeordnet werden, an jener Position, wo jeweils eine Scanperiode mit einer Spiegelfacette beginnt. Dort ist aber der Bauraum äußerst knapp, weshalb die EP 0 967 458 B1 stattdessen eine Umlenkeinheit platziert, die das Licht auf einen weniger kritischen Ort des Startsensors leitet. Die US 5 006 721 betrifft einen LIDAR-Scanner mit Polygonspiegelrad, bei dem ein Startsensor mit einem Paar aus Laserdiode und Empfänger jeweils beim Auftreffen auf die Mitte einer Facette ein Signal erzeugt.

Obwohl Barcodes längst auch mit Kameras gelesen werden können, sind Barcodescanner weiterhin in vielfältiger Form im Einsatz. Einer der Vorteile ist, dass der Lesebereich ohne größeren optischen Konstruktionsaufwand an Tiefe gewinnt, der unter anderem durch den Spotdurchmesser, also die Ausdehnung des abtastenden Laserspots begrenzt ist. Etwas präziser ausgedrückt bestimmt die sogenannte Kaustik des Laserstrahls den Tiefenschärfebereich, d.h. die Funktion des Spotdurchmessers in Abhängigkeit von dem Leseabstand. Um einen Barcodebalken noch aufzulösen, darf der Spotdurchmesser dessen Breite zumindest nicht signifikant überschreiten.

Nun gibt es Anwendungsfälle insbesondere im Nahbereich, wo die Lesefelder einer fixen Sendeoptik nicht mehr ausreichen und eine größere Tiefe des Lesebereichs über die theoretischen Grenzen der Tiefenschärfe hinaus wünschenswert wäre. Eine Möglichkeit ist, die Fokuslage mechanisch nachzuführen, die Kollimationslinse also mit Hilfe einer Aktorik zu verschieben. Bei einer einmaligen Anpassung während der Einrichtung ist der apparative Aufwand noch überschaubar, aber die Einstellung ist dann bis zur nächsten manuellen Umstellung fixiert. Eine dynamische Anpassung erfordert einen erheblichen konstruktiven Aufwand aufgrund der hohen Positioniergenauigkeit, die in extrem kurzen Positionierzeiten realisiert werden muss, und dies schlägt sich sowohl auf die Baugröße als auch auf die Herstellkosten nieder.

Es wird im Stand der Technik vorgeschlagen, den Spiegelfacetten eines Polygonscanners unterschiedliche Fokuseigenschaften zu geben. So weist in der DE 36 02 008 A1 wenigstens eine Spiegelfläche gegenüber den übrigen Spiegelflächen unterschiedliche Fokussierungseigenschaften auf. In der Auswertungselektronik werden nur die Empfangssignale ausgewertet, die von scharfen Empfangslichtflecken stammen. Ein ähnliches Konzept mit Spiegelfacetten unterschiedlicher Krümmung ist auch aus US 5 179 271 oder US 4 560 862 bekannt. Dabei ist aber jeweils nicht bedacht, dass die gekrümmten Spiegelfacetten während der Scanbewegung unterschiedliche Wirkungen auf den Lichtstrahl haben.

Es gibt auch noch andere Ideen, wie Spiegelfacetten untereinander variiert werden können. Damit werden jeweils unterschiedliche Anforderungen erfüllt, die jedoch nicht den Tiefenschärfenbereich erweitern. So nutzt die US 4 624 528 gekrümmte Spiegelfacetten, um Abbildungsfehler zu kompensieren. Das basiert auf einer umständlichen und störanfälligen Konstruktion mit weiteren Spiegeln und einer so erzeugten doppelten Reflexion an den Spiegelfacetten aus unterschiedlichen Richtungen. Die DE 10 2015 104 021 A1 nutzt die verschiedenen Spiegelfacetten dafür, die Aussteuerung des Empfangssignals zu verbessern. Dazu wird der Reflexionsgrad zwischen den Spiegelfacetten variiert, um unterschiedlich starke Signale zu empfangen. In der Einleitung der DE 10 2014 100 245 B3 wird erwähnt, dass man die Spiegelfacetten eines Polygonscanners gegeneinander verkippen kann. Dadurch entsteht ein Höhenversatz bei den wiederholten Abtastungen, die eine Mehrlagenabtastung ermöglicht. Die DE 10 2014 111 138 A1 befasst sich ebenfalls mit einer solchen Mehrlagenabtastung und ergänzt Maßnahmen, um Verzerrungen durch das Verkippen zu kompensieren.

Die DE 10 2012 016 788 A1 betrifft einen Laserscanner mit rotatorisch angetriebenem Umlenkspiegel zur Materialbearbeitung. Die Spiegelflächen sind als Freiformfläche so dreidimensional geformt, dass der Laserstrahl aufgrund der Rotation periodisch auf einer einfach oder mehrfach gekrümmten Abtastbahn geführt wird. Durch geeignete Wahl der dreidimensionalen Form der Spiegelflächen kann in gewissen Grenzen auch eine 3D-Bearbeitung am Werkstück oder eine Strahlformung beziehungsweise Fokussierung erreicht werden.

Aus der EP 1 873 685 A2 ist ein verzerrtes Polygonspiegelrad bekannt, das also kein regelmäßiges n-Eck mit gleichen Winkeln bildet, sondern paarweise gespiegelte abweichende Winkel. Dadurch entstehen Scanlinien, die abwechselnd nach links und rechts versetzt werden.

Daher ist Aufgabe der Erfindung, die Erfassung mit einem Polygonscanner weiter zu verbessern.

Diese Aufgabe wird durch einen Polygonscanner und ein Verfahren zum Erfassen von Objekten in einem Überwachungsbereich nach Anspruch 1 beziehungsweise 14 gelöst. Ein solcher Polygonscanner besitzt eine drehbare Spiegeleinheit mit mehreren Spiegelfacetten, die während einer Umdrehung nacheinander den scannenden Lichtstrahl ablenken. Dabei handelt es sich insbesondere um ein Polygonspiegelrad mit Spiegelflächen oder Spiegelfacetten am Außenumfang, woher auch die Bezeichnung Polygonscanner abgeleitet ist. Mindestens einige der Spiegelfacetten weisen untereinander eine unterschiedliche Krümmung auf. Da in einem Polygonscanner ein Winkelausschnitt oder Segment des Überwachungsbereichs je Umdrehung der Spiegeleinheit mehrfach abgetastet wird, nämlich einmal je Spiegelfacette, ergibt sich mit den unterschiedlichen Krümmungen eine Mehrfachabtastung bei unterschiedlichen Fokussierungseigenschaften beziehungsweise mit unterschiedlichen Tiefenschärfenbereichen.

Die Erfindung geht nun von dem Grundgedanken aus, nicht nur eine einfache fokussierende Krümmung vorzusehen, sondern die Krümmung auch an den unterschiedlichen Einfallswinkel des ausgesandten Lichtstrahls auf der jeweils aktiven Spiegelfacette zu berücksichtigen, die sich in Drehbewegung befindet und somit bezüglich des ausgesandten Lichtstrahls kontinuierlich verkippt. Dazu ist mindestens eine Spiegelfacette als Freiformfläche ausgebildet. Die Freiform lässt dem Optikdesign die erforderlichen Freiheitsgrade, zugleich den gewünschten Tiefenschärfenbereich und die Anpassung an den variierenden Einfallswinkel zu leisten. Insbesondere variiert die Krümmung in Umfangsrichtung der Spiegelfacette, und zwar vorzugsweise nicht-symmetrisch, d.h. die Krümmung vom Anfangsbereich der Spiegelfacette bis zur Mitte ist eine andere als von der Mitte zum Endbereich.

Die Erfindung hat den Vorteil, dass der Tiefenschärfebereich ohne aufwändige aktorbetriebene Fokusverstelleinheit samt Ansteuerelektronik erweitert wird. Das ermöglicht kleinere und kostengünstigere Geräte. Bei einer Spiegeleinheit aus Kunststoff genügt es, die Werkzeuge anzupassen, beispielsweise bei einem Spritzgussverfahren die bisher flachen Stempeleinsätze durch solche mit der negativen Freiform zu ersetzen. Bis auf die einmaligen Umrüstkosten kann dann die erfindungsgemäße Spiegeleinheit praktisch kostenneutral hergestellt werden. Ein weiterer Vorteil ist das praktisch sofortige Umschalten der Fokuslage von einer Spiegelfacette zur nächsten, die ein Abscannen verschiedener Arbeitsabstände in kürzester Zeit ermöglicht.

Die Freiformfläche ist erfindungsgemäß so gekrümmt, dass für die variierenden Einfallswinkel eine gleiche Fokuslage eingestellt ist. Die zusätzliche Krümmung der Freiform über die einfache fokussierende Wirkung hinaus sorgt hier für eine Kompensation der Drehbewegung. Dadurch werden Verzerrungen innerhalb einer Scan- oder Leselinie durch einen wandernden Tiefenschärfebereich aufgrund der wechselnden Einfallswinkel vermieden. Es ist alternativ auch denkbar, mit der Freiform unterschiedliche Fokuslagen während der Abtastung zu erzeugen, beispielsweise eine Asymmetrie mit links der optischen Achse kürzeren Fokuslagen als rechts. Insbesondere kann eine solche Asymmetrie in einer anderen Spiegelfacette gerade umgekehrt gewählt werden.

Die Freiformfläche weist bevorzugt eine Verkippung aus einer Abtastebene des Lichtstrahls auf. In Umfangsrichtung sind die Spiegelfacetten immer gegeneinander verkippt, sonst entstünde kein Polygonspiegelrad. Gemeint ist in dieser Ausführungsform eine Verkippung gegenüber dieser definitionsgemäßen Lage. Mindestens einige Spiegelfacetten sind also durch die Formgebung der Freiform in ihrer optischen Wirkung effektiv gegen die Ebene des Polygonspiegelrads angeschrägt. Daraus ergibt sich ein Versatz der Scan- oder Leselinien für eine Mehrfachabtastung. Es ist auch eine effektive Verkippung der Scan- oder Leselinien in beiden Achsen möglich. So wird in einem Barcodescanner der Barcode aus mehreren Richtungen erfasst, was verhindert, dass alle Leselinien zufällig parallel zu den Balken verlaufen beziehungsweise den Barcode nicht komplett quer überstreichen.

Die Freiformfläche ist vorzugsweise so gekrümmt, dass der Abtastbereich des ausgesandten Lichtstrahls begradigt ist. Spiegelfacetten sind häufig aus der Ebene des Polygonspiegelrads angeschrägt, sei es in unterschiedlichem Grad für eine Mehrfachabtastung oder gemeinsam für eine Umlenkung im Gerät. Der Abtastbereich ist dann keine Ebene mehr, sondern ein Kegelmantel, so dass die Scan- und Leselinien gekrümmt werden. Auch dieser Effekt kann durch die Freiform zumindest teilweise kompensiert werden.

Der Polygonscanner weist bevorzugt eine Winkelbestimmungseinheit für eine Überwachung der Drehstellung der Spiegeleinheit auf, wobei die Auswertungseinheit dafür ausgebildet ist, mit Hilfe der Drehstellung die jeweils aktive Spiegelfacette zu identifizieren. Dadurch kann der jeweilige Erfassungswinkel bestimmt werden, so dass die Messwerte eines Laserscanners eine zumindest grobe Winkelauflösung gewinnen. Bei einem Barcodescanner dagegen ist der konkrete Winkel nicht wichtig. Es kann aber vorteilhaft sein, die jeweils aktive Spiegelfacette zu identifizieren, so dass bekannt ist, mit welchen optischen Parametern, insbesondere welchem Tiefenschärfenbereich, die jeweiligen Signale erfasst werden. Die Winkelbestimmungseinheit muss den Winkel keineswegs fein auflösen. Bei einer ein- oder mehrmaligen Synchronisation pro Umdrehung kann interpoliert werden. Dazu wird das zwischen zwei Synchronisationszeitpunkten liegende Zeitintervall auf die Winkelbereiche der Spiegelfacetten oder sogar auf Winkelwerte aufgeteilt.

Der Polygonscanner weist vorzugsweise einen Startsensor auf, der jeweils zu Beginn einer Abtastung mit einer jeweiligen Spiegelfacette den ausgesandten Lichtstrahl erfasst, und wobei zumindest eine Spiegelfacette eine Modifikation aufweist, die eine Identifizierung der Spiegelfacette aus dem Startsignal ermöglicht, das der ausgesandte Lichtstrahl in dem Startsensor erzeugt. Ein solcher Startsensor ist an sich bekannt, erzeugt aber üblicherweise gleichartige Pulse. Es wird dadurch nur erfasst, wenn sich eine neue Spiegelfacette in den ausgesandten Lichtstrahl gedreht hat und somit eine neue Abtastung beginnt. Die Modifikation der Spiegelfacette dient dazu, das Startsignal zuzuordnen, ihm also eine individuelle Eigenschaft zu geben, um es von anderen Startsignalen zu unterscheiden. Eine solche Modifikation kann nur eine Spiegelfacette betreffen, um eine einmalige Synchronisation je Umdrehung zu ermöglichen. Bis zur nächsten Synchronisation werden dann die Startpulse einfach gezählt und danach zugeordnet. Es ist aber auch denkbar, Modifikationen an mehreren oder allen Spiegelfacetten anzubringen, die sich dann voneinander unterscheiden sollten.

Die Spiegelfacetten weisen als Modifikation eine unterschiedliche Größe auf, insbesondere durch Toleranzabweichungen. Diese Größe bezieht sich auf die Umfangsrichtung. Das Polygon der Spiegeleinheit ist also kein gleichseitiges n-Eck, sondern unregelmäßig. Vorzugsweise ist gar keine gezielte Wahl unterschiedlich großer Spiegelfacetten erforderlich, sondern es werden nur die natürlichen Toleranzen genutzt.

Die Auswertungseinheit ist bevorzugt dafür ausgebildet, eine zeitliche Abfolge der Startsignale als Referenz einzulernen und im Betrieb durch Vergleich der Abfolge der Startsignale mit der Referenz die jeweils aktive Spiegelfacette zu identifizieren. Da die Umdrehungszahl der Spiegeleinheit als im Wesentlichen konstant betrachtet werden kann, würde eine Spiegeleinheit mit ideal gleich großen Spiegelfacetten ein gleichmäßiges Zeitmuster der Startsignale erzeugen. Bei unterschiedlich großen Spiegelfacetten, sei es per Design oder durch Toleranzen, verschiebt sich dieses Zeitmuster in einer charakteristischen Weise wie eine Art Fingerabdruck. Wenn die Auswertungseinheit dieses Zeitmuster kennt, kann sie die gemessenen Startpulse damit vergleichen und so die jeweils aktive Spiegelfacette identifizieren.

Die Spiegelfacette weisen bevorzugt als Modifikation in einem Anfangsbereich, der das Startsignal erzeugt, eine zu der restlichen Spiegelfacette unterschiedliche Reflexivität und/oder Krümmung auf. Der Anfangsbereich ist derjenige Teil einer Spiegelfacette, der sich jeweils zuerst in den ausgesandten Lichtstrahl hineindreht. Für die Messung ist das hier erzeugte Signal ohnehin noch nicht verfügbar, da es vom Startsensor ausgewertet wird. Wählt man nun in diesem Anfangsbereich für eine Spiegelfacette eine höhere oder geringere Reflexivität, so entsteht ein entsprechend stärkeres oder schwächeres Startsignal, mit dem die Spiegelfacette identifiziert wird. Durch eine veränderte Krümmung im Anfangsbereich mit konvergierender oder divergierender Wirkung wird der Sendelichtfleck, den der ausgesandte Lichtstrahl auf dem Startsensor erzeugt, kleiner oder größer, so dass auch auf diese Weise ein identifizierbares Startsignal entsteht. Eine derartige Kontur im Anfangsbereich lässt sich unmittelbar in die Freiform integrieren. Alternativ zu einer Modifikation im Anfangsbereich könnte auch die gesamte Spiegelfacette modifiziert werden. Das hat je nach Ausführungsform herstellungstechnische Vorteile, aber dafür geht ein Scan je Umdrehung verloren oder ist zumindest durch die Modifikation verändert.

In dem Anfangsbereich ist besonders bevorzugt ein Muster aus Bereichen unterschiedlicher Reflexivität vorgesehen ist. So entsteht nicht nur eine Verstärkung oder Abschwächung des Startsignals, sondern ein Hell-Dunkel-Muster. Beispiele sind mehrere abwechselnde Streifen hoher und geringer Reflexivität, die zu Doppel- oder Mehrfachpulsen im Startsignal führen. Das ist dann besonders einfach zu erkennen, um die Spiegelfacette zu identifizieren.

Der Winkelbestimmungseinheit wird vorzugsweise ein Tachosignal eines Antriebs zum Drehen der Spiegeleinheit zugeführt. Beispielsweise erzeugt der Antrieb als Tachosignal mehrere Pulse je Umdrehung. Dann werden die Anzahl der Pulse und die Anzahl der Spiegelfacetten vorzugsweise teilerfremd gewählt. Die Tachopulse und die Startpulse eines Startsensors haben nämlich bei diesen Zahlenverhältnissen für jede Spiegelfacette einen unterschiedlichen Zeitversatz, an dem die Spiegelfacette sofort erkannt werden kann. Alternativ zu einem einfachen Tachosignal ist auch der Einsatz eines Encoders denkbar, der die jeweilige Winkelstellung beispielsweise anhand der Abtastung einer mitdrehenden Codescheibe bestimmt.

Die Auswertungseinheit ist bevorzugt dafür ausgebildet, aus dem Empfangssignal mit einem Lichtlaufzeitverfahren eine Entfernung eines angetasteten Objekts zu bestimmen. Der Polygonscanner wird so zu einem entfernungsmessenden Scanner. Auch in einem Barcodescanner kann dies hilfreich sein, um zu wissen, welcher Tiefenschärfenbereich tatsächlich erforderlich ist, um beispielsweise die Scans der dazu passenden Spiegelfacetten auszuwählen. Als Lichtlaufzeitverfahren kommt jedes bekannte Verfahren in Betracht, von denen einleitend einige skizziert wurden.

Die Auswertungseinheit ist bevorzugt dafür ausgebildet, die Empfangssignale von unterschiedlichen Spiegelfacetten miteinander zu vergleichen und das Empfangssignal mit der größten Schärfe auszuwerten. Dadurch werden nur Messungen der am besten zu dem tatsächlichen Objektabstand passenden Spiegelfacette genutzt. Effektiv werden so nur scharf aufgenommene Empfangssignale weiter ausgewertet. Da die Bestimmung der Schärfe einen gewissen Auswertungsaufwand bedeutet, ist im Falle eines Barcodescanners auch denkbar, mit jedem Scan eine Decodierung zu versuchen. Einer dieser Versuche wird automatisch die schärfsten Signale betreffen, aber letztlich ist belanglos, mit welchem Empfangssignal die Decodierung gelingt. Falls die Drehstellung überwacht wird, ist auch denkbar, sich auf bestimmte Spiegelfacetten festzulegen und nur deren Empfangssignal auszuwerten, die einer erwarteten, parametrierten oder in sonstiger Weise gewünschten Fokussierung entsprechen.

Der Polygonscanner ist vorzugsweise als Barcodescanner ausgebildet, und dessen Auswertungseinheit weist einen Barcodedecoder auf. Zahlreiche Vorteile und Ausgestaltungsmöglichkeiten eines erfindungsgemäßen Polygonscanners beim Lesen von Barcodes wurden bereits diskutiert.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittansicht eines Polygonscanners;
- Fig. 2: eine schematische dreidimensionale Ansicht eines Polygonspiegelrads und des Strahlverlaufs eines Abtaststrahls;
- Fig. 3: eine schematische Ansicht des Strahlverlaufs des Abtaststrahls in verschiedenen Drehstellungen einer Spiegelfacette eines Polygonspiegelrads;
- Fig. 4: eine Darstellung einer beispielhaften Freiformfläche für eine Spiegelfacette;
- Fig. 5: eine erläuternde skizzenhafte Darstellung von Scan- oder Leselinien, die mit einer Freiformfläche begradigt werden;
- Fig. 6: eine schematische Schnittansicht einer weiteren Ausführungsform eines Polygonscanners mit einem Startsensor;
- Fig. 7: beispielhafte Signalverläufe eines Tachosignals eines Antriebs eines Polygonspiegelrads und der Startsignale eines Startsensors;
- Fig. 8a-d: Darstellungen verschiedener Modifikationen der Reflexivität im Anfangsbereich einer Spiegelfacette, um ein identifizierbares Startsignal zu erzeugen; und
- Fig. 9: eine Darstellung ähnlich den Figuren 8a-d, jedoch mit einer modifizierten Krümmung anstatt einer modifizierten Reflexivität.

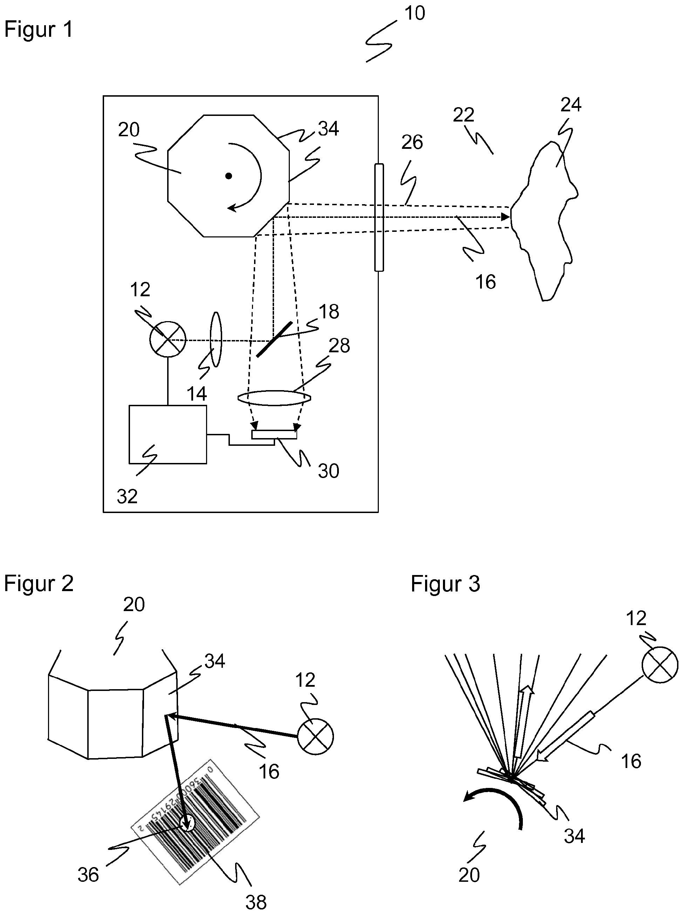

Figur 1 zeigt eine Blockdarstellung eines Polygonscanners 10. Ein Lichtsender 12, beispielsweise eine Laserdiode oder eine LED, erzeugt mit Hilfe einer Sendeoptik 14 einen Lichtstrahl 16, der ein erstes Mal über ein fixes Ablenkelement 18 und ein zweites Mal über ein rotierendes Polygonspiegelrad 20 umgelenkt und dann in einen Überwachungsbereich 22 ausgesandt wird.

Trifft der Lichtstrahl 16 in dem Überwachungsbereich 22 auf ein Objekt 24, so kehrt ein reflektierter Lichtstrahl 26 zu dem Polygonscanner 10 zurück, wird erneut an dem Polygonspiegelrad 20 umgelenkt und trifft dann über eine Empfangsoptik 28 auf einen Lichtempfänger 30. Dabei wird hier sprachlich nicht zwischen Reflexion und der wesentlich häufiger auftretenden diffusen Remission an dem Objekt 24 unterschieden. Das fixe Ablenkelement 18 ist entweder als Strahlteiler ausgebildet oder so klein, dass nur ein vernachlässigbarer Teil der Empfangsoptik 28 abgeschattet wird, so dass der reflektierte Lichtstrahl 26 das fixe Ablenkelement 18 passieren kann. Möglich wäre auch ein Strahlteiler oder eine biaxiale Ausführung. Ausgesandter Lichtstrahl 16 und reflektierter Lichtstrahl 26 sind dann im Wesentlichen parallel zueinander mit einem geringen Abstand beispielsweise in Richtung der Drehachse des Polygonspiegelrades 20. Der Grundaufbau des Polygonscanners 10 gemäß Figur 1 ist also nur beispielhaft zu verstehen. So können etwa Sende- und Empfangspfad auch anders getrennt werden als durch die dargestellte gekreuzte Anordnung mit fixem Ablenkelement 18, oder das Polygonspiegelrad 20 kann gegenüber Sende- und Empfangspfad anders angeordnet und orientiert werden. Es ist auch denkbar, nur den ausgesandten Lichtstrahl 16 über das Polygonspiegelrad 20 zu führen und empfangsseitig beispielsweise eine fixe Empfängerzeile einzusetzen.

Ein von dem Lichtempfänger 30 erzeugtes Empfangssignal wird an eine Auswertungseinheit 32 übergeben. Dort wird beispielsweise erkannt, ob überhaupt ein Objekt 24 angetastet wurde. Bei einem messenden Polygonscanner 10 kann mit einem Lichtlaufzeitverfahren dessen Abstand ermittelt werden. Vorzugsweise wird dann zusätzlich die Winkelstellung des Polygonspiegelrads 20 mit einem nicht gezeigten Decoder oder, zumindest grob oder interpolierend, auf eine der unten noch beschriebenen Weisen bestimmt. Dann werden insgesamt Objektpositionen oder Objektkonturen in Polarkoordinaten erfassbar. Eine mögliche Anwendung ist die Vermessung von Objekten, insbesondere Paketen auf Förderbändern. Ein als Barcodescanner ausgebildeter Polygonscanner 10 versucht mit einem Decoder der Auswertungseinheit 32 Barcodes auf dem Objekt 24 zu identifizieren und zu lesen. Das ist ein Beispiel einer Ausführungsform, die vorzugsweise ohne Bestimmung von Abständen oder genauen Winkelstellungen auskommt.

Das Polygonspiegelrad 20 wird durch einen nicht dargestellten Antrieb in Rotation versetzt und ist ein Beispiel für eine drehbare Spiegeleinheit mit mehreren Spiegelfacetten 34 an ihrem Außenumfang. Die Anzahl der Spiegelfacetten 34 korrespondiert mit dem erfassten Winkelbereich oder abgetasteten Segment des Überwachungsbereichs 22, der umso größer ist, je weniger Spiegelfacetten 34 vorgesehen sind. Demnach ist die gezeigte Anzahl von acht Spiegelfacetten 34 rein beispielhaft, und es können ebenso mehr oder weniger Spiegelfacetten 34 vorgesehen sein. Die Grundfläche muss auch kein regelmäßiges Vieleck sein, sondern es ist prinzipiell auch möglich, Spiegelfacetten 34 unterschiedlicher Länge vorzusehen. Bei einem biaxialen Aufbau, in dem anders als in Figur 1 der Sende- und Empfangspfad auseinanderfallen, ist denkbar, dass die Spiegelfacetten 34 eigene Sende- und Empfangsbereiche aufweisen, die unterschiedlich ausgestaltet sind.

Figur 2 zeigt eine schematische dreidimensionale Ansicht des Polygonspiegelrads 20 und der geometrischen Anordnung des ausgesandten Lichtstrahls 16. Zumindest eine der Spiegelfacetten 34 weist eine Krümmung auf, die sich von den übrigen Spiegelfacetten 34 unterscheidet. Deshalb ist der Lichtfleck 36, den der ausgesandte Lichtstrahl 16 auf dem hier als Barcode 38 dargestellten Objekt 24 erzeugt, in einem anderen Arbeitsabstand fokussiert.

Auf diese Weise wird der insgesamt abzudeckende Entfernungsbereich in mindestens zwei unterschiedliche Tiefenschärfenbereiche unterteilt. Die minimale Konfiguration wäre, dass eine Spiegelfacette 34 eine Krümmung aufweist und die übrigen Spiegelfacetten 34 flach bleiben. Am anderen Ende der Skala besteht die Möglichkeit, jeder Spiegelfacette 34 eine eigene Krümmung zu geben und so eine maximale Anzahl von unterschiedlichen Tiefenschärfenbereichen zu schaffen. Die Erfindung umfasst auch die zahlreichen dazwischen denkbaren Kombinationen von Klassen flacher, gleichartig und unterschiedlich gekrümmter Spiegelfacetten 34. Hier ist zwischen einer feinen Unterteilung des Abstandsbereichs in mehrere Tiefenschärfenbereiche und der reduzierten effektiven Scanfrequenz zwischen zwei wiederholten Scans im gleichen Tiefenschärfenbereich abzuwägen. In der Praxis wird das Optimum zwischen erzielbarer Tiefenschärfe und verfügbarer Scanfrequenz bei zwei oder drei unterschiedlichen Fokuslagen entsprechend Klassen unterschiedlich gekrümmter Spiegelfacetten 34 liegen. Es besteht auch die Möglichkeit, eine reduzierte Scanfrequenz durch Erhöhung der Drehzahl des Polygonspiegelrads 20 auszugleichen. Das muss dann aber nicht nur der Antrieb leisten können, sondern auch die Bandbreite und Verarbeitungsgeschwindigkeit der Elektronik und insbesondere der Auswertungseinheit 32.

Während des Betriebs des Polygonscanners 10 wird durch die Drehung des Polygonspiegelrads 20 der Überwachungsbereich 22 mehrfach abgetastet, nämlich während einer vollen Umdrehung je einmal mit jeder Spiegelfacette 34. Dies bedeutet eine Mehrfachmessung derselben Szenerie, sofern sie innerhalb der kurzen Umdrehungsperiode als quasistationär angesehen werden kann. Aufgrund der unterschiedlichen Krümmungen der Spiegelfacetten 34 sind das allerdings keine reinen Messwiederholungen. Vielmehr springt die Fokuslage zwischen zumindest einigen der Spiegelfacetten 34 von einer Fokuslage zur nächsten. Die Auswertungseinheit 32 erhält also mehrere Empfangssignale mit an sich gleicher Messinformation, jedoch unterschiedlicher Fokussierung. Bei geeigneter Auslegung der Krümmungen der Spiegelfacetten 34 erfolgt für jede zu erfassende Entfernung des Objekts 24 zumindest ein Scan je Umdrehung innerhalb des Tiefenschärfenbereichs oder wenigstens nahe daran.

Die Auswertungseinheit 32 kann durch diverse Maßnahmen den am besten fokussierten Scan verwenden. Eine Möglichkeit ist, die Schärfe des Empfangssignals beispielsweise anhand von Kontrasten zu bestimmen und das beste Empfangssignal auszuwählen. Eine andere Möglichkeit ist, eine bestimmte Spiegelfacette 34 festzulegen, von der das beste Empfangssignal erwartet wird, beispielsweise durch Einstellen eines Arbeitsabstands, aus Vorwissen früherer Messungen oder einer Abstandsmessung. Beim Barcodelesen muss nicht zwingend ein bestes Empfangssignal gewählt sein, vielmehr kann es genügen, mit allen Empfangssignalen eine Decodierung zu versuchen. Bei erfolgreicher Decodierung ist dann gar nicht mehr von Interesse, welche Spiegelfacette 34 das Empfangssignal aufgenommen hat. Es besteht jedoch die Möglichkeit, diese Spiegelfacette anhand der erfolgreichen Decodierung zu identifizieren und beispielsweise für nachfolgende Leseversuche zu bevorzugen oder daraus einen zumindest groben Abstandswert als weitere Messinformation abzuleiten.

Die Spiegelfacetten 34 müssen durch ihre Krümmung den ausgesandten Lichtstrahl 16 nicht allein formen. Vielmehr dient dazu zunächst die vorzugsweise vorgesehene Sendeoptik 14 schon bevor der Lichtstrahl 16 auf das Polygonspiegelrad 20 trifft. Die Spiegelfacetten 34 verändern dann nur noch die durch die Sendeoptik 14 vorgegebene Fokuslage. Es ist auch denkbar, eine adaptive Sendeoptik 14 einzusetzen, beispielsweise mit einer Flüssiglinse, über die dann der gemeinsame Anteil der Fokuslage und damit alle Tiefenschärfenbereiche der Spiegelfacetten 34 verstellt werden. Dadurch kann ein Gesamtarbeitsbereich des Polygonscanners 10 angepasst werden.

Die Spiegelfacetten 34 können zusätzlich zu ihren Eigenschaften, welche die Fokussierung betreffen, auch in anderer Hinsicht unterschiedlich ausgeführt sein. Beispiele sind unterschiedliche Reflexionsgrade, um analog zum Tiefenschärfenbereich den Dynamikbereich aufzuteilen, oder eine zusätzliche Verkippung für eine Mehrlagenabtastung.

Figur 3 ist eine weitere Darstellung der Spiegelfacetten 34 sowie der geometrischen Anordnung des ausgesandten Lichtstrahls 16 nun in unterschiedlichen Drehstellungen des Polygonspiegelrads 20. Es ist deutlich zu erkennen, dass der Einfallswinkel des ausgesandten Lichtstrahls 16 auf die Spiegelfacetten 34 während einer Abtastung variiert. Eine einfache konvexe oder konkave Formgebung der Spiegelfacetten 34 wird diesem unterschiedlichen Einfallswinkel nicht gerecht, sondern würde vielmehr zu einer unkontrollierten Variation der Fokuslage während des Scans führen.

Daher ist zumindest eine der Spiegelfacetten 34 als Freiformflächen ausgebildet, die an den variierenden Einfallswinkel angepasst sind. Erfindungsgemäß sorgt die Freiform dafür, dass sich während der Rotation über die Spiegelfacette 34 die Fokuslage nicht ändert, der Arbeitsabstand also konstant bleibt. Es ist aber auch denkbar, die Fokuslage durch die Freiform gezielt zu verändern, etwa von Anfang zu Ende eines Scans zu erhöhen oder umgekehrt zu reduzieren. Die Freiformfläche ist dann asymmetrisch und die Fokuslage auf einer Seite der optischen Achse kürzer als auf der anderen.

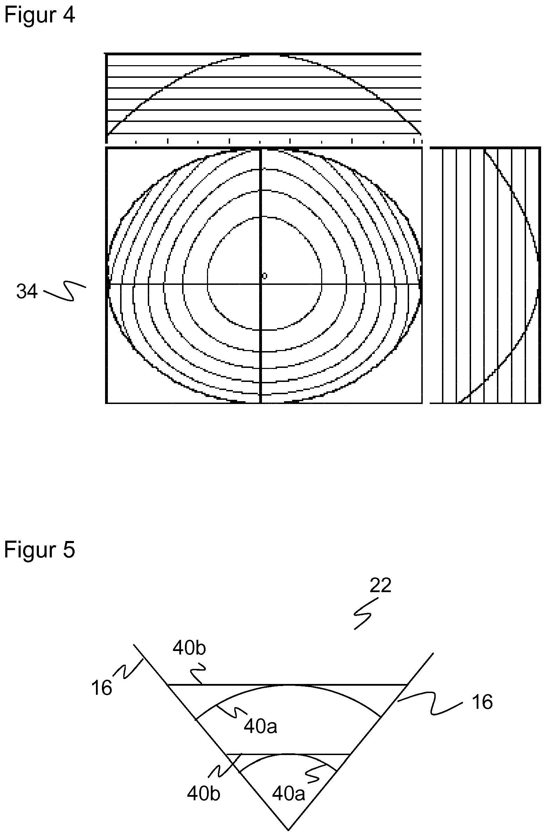

Figur 4 zeigt ein Beispiel einer Freiform für eine Spiegelfacette 34, welche die Fokuslage bei variierendem Einfallswinkel während eines Scans konstant hält. Die konkrete Formgebung ist das Ergebnis einer Optiksimulation, welche die Krümmung stetig und differenzierbar positionsabhängig anpasst. In Figur 4 ist die Freiformfläche als "Extended Polynomial" mit vorzugsweise 14 Termen dargestellt und als Beispiel zu verstehen. Der Lichtfleck 36 wandert während des Scans in Umfangsrichtung über die Spiegelfacette 34, in Figur 4 von oben nach unten, und ist vorzugsweise in der dazu senkrechten Höhenrichtung zentriert, in Figur 4 der horizontalen Richtung.

Die Krümmungen der Freiform der Spiegelfacette 34, die auf den ausgesandte Lichtstrahl 16 während des Scans einwirken, sind bestimmungsgemäß je nach Einfallswinkel unterschiedlich, und diese Veränderung ist, wie an der Dichte der Höhenlinien und an der Darstellung des Y-Verlaufs der Krümmung rechts in Figur 4, vorzugsweise in Bewegungsrichtung des Lichtflecks 36 nicht symmetrisch zur Mitte. Vielmehr fällt die Freiform zum Ende hin, also in Figur 4 nach unten, mit größerer Steigung und auf ein tieferes Niveau ab. Anders ausgedrückt hat die Freiform in gemäß der Rotation orientierter Umfangsrichtung eine steilere ansteigende und eine flachere abfallende Flanke.

Figur 5 erläutert die Möglichkeit, mit der Freiform der Spiegelfacette 34 zusätzlich eine Begradigung der Abtastbereiche zu erreichen. Im Überwachungsbereich 22 erzeugt der Lichtfleck 36 des ausgesandten Lichtstrahls 16 auf einer virtuellen oder tatsächlichen Ebene senkrecht zu Aussenderrichtung Scan- oder Leselinien 40a-b. Ohne eine besondere ausgleichende Krümmung in der Freiform sind solche Leselinien 40a oft gekrümmt, wie einleitend kurz und in der dort zitierten DE 10 2014 111 138 A1 ausführlich erläutert. Die Leselinien 40a können durch Anpassungen in der Freiform verändert und insbesondere zu geraden Leselinien 40b begradigt werden.

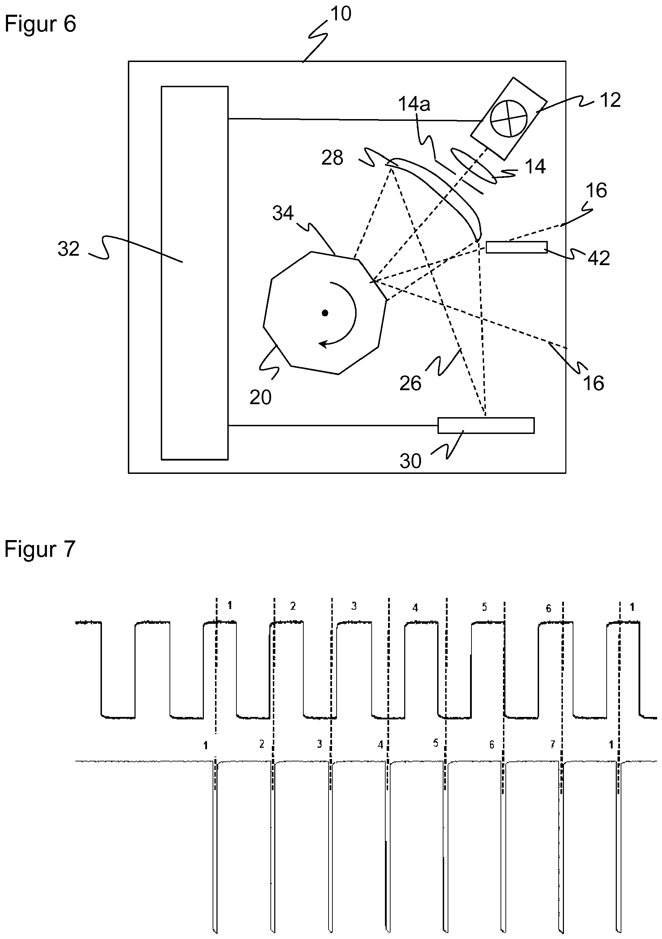

Figur 6 zeigt eine schematische Schnittansicht einer weiteren Ausführungsform eines Polygonscanners 10. Dabei ist zum einen der Aufbau gegenüber Figur 1 verändert, um erneut den Beispielcharakter zu unterstreichen. Die Erfindung ist, wie auch schon zu Figur 1 erläutert, weder auf den konkreten Aufbau der Figur 1 noch der Figur 6 beschränkt. In der Ausführungsform nach Figur 6 weist die Sendeoptik 14 eine zusätzliche Blende 14a auf. Die Empfangsoptik 28 ist reflexiv ausgestaltet. Die optische Achse des Lichtsenders 12 fällt mit der optischen Achse der Empfangsoptik 28 zusammen, so dass auf das fixe Ablenkelement 18 der Figur 1 verzichtet werden kann.

Zusätzlich ist ein Startsensor 42 im Sendepfad angeordnet, und zwar an einer Position, die der ausgesandte Lichtstrahl 16 zu Beginn eines jeweiligen Scans mit einer neu in den Strahlengang gedrehten, damit nun aktiven Spiegelfacette 34 passiert. Anstelle des Startsensors 42 selbst kann an dieser Position auch ein Lichtumlenkelement positioniert sein, um den eigentlichen Startsensor 42 an einer anderen Stelle unterbringen zu können. Ein Startsensor 42 ist auch in der Ausführungsform nach Figur 1 oder den dort genannten Varianten denkbar. Die Verbindung des Startsensors 42 zur Auswertungseinheit 32 ist der Übersicht halber nicht dargetellt.

Der Startsensor 42 registriert zu Beginn eines jeweiligen Scans den ausgesandten Lichtstrahl 16 beziehungsweise den davon erzeugten Lichtfleck 36 und erzeugt ein elektronisches Startsignal. Es entsteht je Umdrehung des Polygonspiegelrads eine Anzahl von Startsignalen, die der Anzahl der Spiegelfacetten 34 entspricht. Damit kann die weitere Erfassung synchronisiert werden. Es ist aber keine Zuordnung zu bestimmten Spiegelfacetten 34 möglich, da die Startsignale untereinander nahezu identisch sind. Es wäre aber vorteilhaft, die jeweils aktive Spiegelfacette 34 und damit deren Eigenschaften, insbesondere die zugeordnete Fokuslage, für die weitere Auswertung, eine optimale Einstellung der Signalkonditionierungsparameter beziehungsweise den weiteren Betrieb zu kennen.

Figur 7 illustriert eine erste Ausführungsform zur Identifizierung der aktiven Spiegelfacette 34 mit Hilfe eines Tachosignals des Antriebs des Polygonspiegelrads 20. Dabei sind im oberen Teil Pulse des Tachosignals dargestellt, im unteren Teil Pulse des Startsignals. Das Tachosignal liefert sechs Pulse je Umdrehung, das Polygonspiegelrad 20 weist sieben Facetten auf und erzeugt somit sieben Pulse. Die Zahlen sind nur Beispiele, vorteilhaft ist jedoch, dass sie zueinander teilerfremd sind. Das führt nämlich zu einem für jede Spiegelfacette 34 charakteristischen Zeitversatz zwischen den Tachopulsen und den Startpulsen, an dem die Spiegelfacette 34 sofort und eindeutig identifizierbar ist.

Das Tachosignal kann durch Inter- beziehungsweise Extrapolation auch Pausen überbrücken, in denen kein Startsignal zur Verfügung steht. In vielen Anwendungen wird nämlich der Lichtsender 12 nur auf Anforderung beispielsweise durch einen Lesetrigger eingeschaltet. Daher kann es sinnvoll sein, die Zuordnung von Spiegelfacetten 34 mittels Tachosignal über solche Pausen hinweg fortzusetzen. Bei der nächsten Leseanforderung ist dann sofort die aktive Spiegelfacette 34 bekannt, und es gehen keine anfänglichen Scans durch Neuzuordnung von Spiegelfacetten 34 verloren.

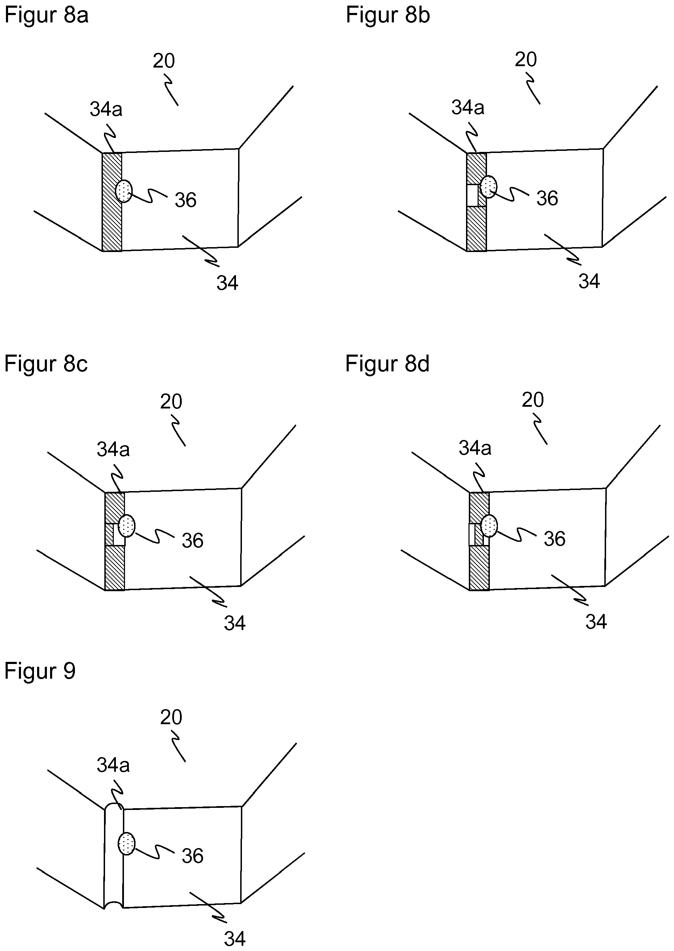

Die Figuren 8a-d zeigen verschiedene Ausführungsformen des Polygonspiegelrads 20 mit einer Spiegelfacette 34, die in ihrem Anfangsbereich 34a veränderte Reflexionseigenschaften aufweist. Dabei ist der Anfangsbereich 34a jener Teil der Spiegelfacette 34, der sich jeweils zuerst in den ausgesandten Lichtstrahl 16 hineindreht und ihn somit in den Startsensor 42 reflektiert. Der Lichtfleck 36 ist relativ groß gegenüber dem Anfangsbereich 34a gezeichnet, was aber vorzugsweise der Fall ist, da sonst der Anfangsbereich 34a einen zu großen Anteil der Spiegelfacette 34 einnimmt und die eigentliche Messung zu stark beeinträchtigt.

Der Anfangsbereich 34a ist in den Ausführungsformen nach Figur 8a-d in seinem Reflexionsgrad verändert. Vorzugsweise wird ein reduzierter Reflexionsgrad beispielsweise durch Schwärzen oder Mattieren eingestellt. Möglich ist auch eine Veränderung der Oberflächenstruktur, was den Vorteil hat, dass dies direkt zusammen mit der Freiform in einen Kunststoff eingebracht werden kann. Eine Erhöhung des Reflexionsgrades funktioniert auch, kann aber technische Schwierigkeiten bereiten, da die Spiegelfacetten 34 ohnehin schon einen hohen Reflexionsgrad etwa in Form metallisierter Oberflächen aufweisen.

Vorzugsweise wird der Anfangsbereich 34a nur einer Spiegelfacette 34 modifiziert. Damit ist eine Synchronisierung pro Umdrehung möglich, die anderen Spiegelfacetten 34 werden durch Abzählen von Startsignalen zuordenbar. Denkbar ist aber auch, mehrere Spiegelfacetten 34 in ihrem Anfangsbereich 34a zu modifizieren. Es ist weiterhin vorstellbar, nicht nur den Anfangsbereich 34a, sondern eine gesamte Spiegelfacette 34 zu modifizieren. Das ist möglicherweise herstellungstechnisch leichter zu realisieren und einfacher auszuwerten, insbesondere kann eine solche viel stärker modifizierbare Spiegelfacette 34 möglicherweise schon ohne den Startsensor 42 aus dem Empfangssignal des Lichtempfängers 30 identifiziert werden. Dafür wird diese Spiegelfacette 34 für die eigentliche Messung geopfert, oder zumindest ist das damit erzeugte Empfangssignal schlechter.

Der Effekt des veränderten Reflexionsgrads im Anfangsbereich 34a ist, dass das Startsignal in einer erkennbaren Weise verändert wird. Die Figuren 8a-d zeigen verschiedene, nicht abschließende Beispiele dafür. In Figur 8a wird der Reflexionsgrad im gesamten Anfangsbereich 34a in gleicher Weise herab- oder heraufgesetzt. Damit hat der Startpuls dieser Spiegelfacette 34 eine höhere oder niedrigere Amplitude als die übrigen Startpulse und ist so unterscheidbar. In den Figuren 8b-d nimmt der Bereich mit einem herab- oder herausgesetzten Reflexionsgrad nur einen Teil der verfügbaren Breite des Anfangsbereichs 34a ein. Dies betrifft in der Darstellung nur die Höhenlage, in der auch der Lichtfleck 36 liegt. Alternativ können sich Streifen über einen anderen oder den gesamten Höhenbereich erstrecken. Der Effekt ist in Figur 8b ein zeitlich etwas verzögerter, schmalerer Startpuls, in Figur 8c ein ebenfalls schmalerer Startpuls, der vorzeitig endet. In Figur 8d trifft der Lichtfleck 36 innerhalb des Anfangsbereichs 34a zweimal auf einen Bereich mit der ursprünglichen Reflexivität, so dass ein besonders einfach unterscheidbarer Doppelpuls entsteht. Mit den anhand Figur 8a-d erläuterten Prinzipien lassen sich also Amplitude, Breite, Zeitversatz und Anzahl von Pulsen im Startsignal verändern, und dadurch ist die eindeutige Identifikation der zugehörigen Spiegelfacette 34 ermöglicht.

Figur 9 zeigt nochmals eine Ausführungsform des Polygonspiegelrads 20 mit einer Spiegelfacette 34, die in ihrem Anfangsbereich 34a in ihrem Krümmungsverhalten statt in ihrer Reflexivität modifiziert ist, beispielsweise durch eine konvexe oder eine konkave Kontur. Beides wäre auch kombiniert denkbar. Der Vorteil eines geänderten Krümmungsverhaltens ist, dass dies direkt in die Freiform integriert werden kann und damit praktisch kostenneutral bleibt. Die zusätzliche Krümmung verkleinert oder vergrößert den Lichtfleck 36 auf dem Startsensor 42, und dementsprechend verschmälert oder verbreitert sich das Startsignal, woran die Spiegelfacette 34 erkannt werden kann.

Eine weitere Möglichkeit, Spiegelfacetten 34 zu modifizieren, betrifft deren Länge in Umfangsrichtung. Die bei gleich langen Spiegelfacetten 34 regelmäßige Zeitabfolge der Startpulse wird bei unterschiedlichen Längen verändert. Dabei ist denkbar, Spiegelfacetten 34 gezielt zu verlängern, mit dem Ergebnis, dass die Grundfläche des Polygonspiegelrads 34 kein regelmäßiges n-Eck mehr ist. Es können aber auch lediglich die Herstellungstoleranzen der Länge herangezogen werden, oder es wird in einer Zwischenlösung für größere Toleranzen gesorgt. Unwuchten, die durch die unterschiedlichen Längen, aber auch die Freiformen in dem Polygonspiegelrad 20 entstehen, können berücksichtigt und konstruktionsseitig ausgeglichen werden.

Die veränderte Zeitabfolge kann dann in der Auswertungseinheit 32 als eine Art Fingerabdruck oder Referenz eingelernt oder parametriert werden. Im Betrieb wird dann die Abfolge der Startpulse mit der Referenz verglichen, um so die jeweils aktive Spiegelfacette 34 zu bestimmen.

Denkbar sind weiterhin zusätzliche Sensoren, welche die Winkelstellung des Polygonspiegelrads 20 überwachen, beispielsweise ein Encoder oder ein Magnetsensor, der einen oder mehrere in bekannter Winkelposition auf dem Polygonspiegelrad 20 angebrachten Magneten erfasst.

## Patentansprüche

1. Polygonscanner (10) zum Erfassen von Objekten (24) in einem Überwachungsbereich (22) mit einem Lichtsender (12) zum Aussenden eines Lichtstrahls (16) in den Überwachungsbereich (22), mit einem Lichtempfänger (30) zum Empfangen des von Objekten (24) in dem Überwachungsbereich (22) reflektierten Lichtstrahls (26), mit einer Auswertungseinheit (32) zum Auswerten eines Empfangssignals des Lichtempfängers (30) und mit einer drehbaren Spiegeleinheit (20) zur periodischen Ablenkung des Lichtstrahls (16), die mehrere Spiegelfacetten (34) aufweist, um so als Überwachungsbereich (22) einen Winkelausschnitt mehrfach je Umdrehung der Spiegeleinheit (20) mit einer jeweiligen Spiegelfacette (34) abzutasten, wobei mindestens einige der Spiegelfacetten (34) untereinander eine unterschiedliche Krümmung aufweisen,
**dadurch gekennzeichnet,**
**dass** mindestens eine der Spiegelfacetten (34) als Freiformfläche ausgebildet ist, deren Krümmung an den während der Drehung der Spiegeleinheit (20) variierenden Einfallswinkel des ausgesandten Lichtstrahls (16) auf der Spiegelfacette (34) angepasst und so gekrümmt ist, dass für die variierenden Einfallswinkel eine gleiche Fokuslage eingestellt ist.

2. Polygonscanner (10) nach Anspruch 1,
wobei die Freiformfläche eine Verkippung aus einer Abtastebene des Lichtstrahls (16) aufweist.

3. Polygonscanner (10) nach einem der vorhergehenden Ansprüche,
wobei die Freiformfläche so gekrümmt ist, dass der Abtastbereich (40a-b) des ausgesandten Lichtstrahls (16) begradigt ist.

4. Polygonscanner (10) nach einem der vorhergehenden Ansprüche,
der eine Winkelbestimmungseinheit (32, 34a, 42) für eine Überwachung der Drehstellung der Spiegeleinheit (20) aufweist, und wobei die Auswertungseinheit (32) dafür ausgebildet ist, mit Hilfe der Drehstellung die jeweils aktive Spiegelfacette (34) zu identifizieren.

5. Polygonscanner (10) nach einem der vorhergehenden Ansprüche,
der einen Startsensor (42) aufweist, der jeweils zu Beginn einer Abtastung mit einer jeweiligen Spiegelfacette (34) den ausgesandten Lichtstrahl (16) erfasst, und wobei eine Spiegelfacette (34) eine Modifikation (34a) aufweist, die eine Identifizierung der Spiegelfacette (34) aus dem Startsignal ermöglicht, das der ausgesandte Lichtstrahl (16) in dem Startsensor (42) erzeugt, oder wobei mehrere Spiegelfacetten (34) eine Modifikation (34a) aufweisen, die eine Identifizierung der Spiegelfacette (34) aus dem Startsignal ermöglichen, das der ausgesandte Lichtstrahl (16) in dem Startsensor (42) erzeugt, wobei sich die Modifikationen (34a) der mehreren Spiegelfacetten (34) voneinander unterscheiden.

6. Polygonscanner (10) nach Anspruch 5,
wobei die Spiegelfacetten (34) als Modifikation eine unterschiedliche Größe aufweisen, insbesondere durch Toleranzabweichungen.

7. Polygonscanner (10) nach Anspruch 6,
wobei die Auswertungseinheit (32) dafür ausgebildet ist, eine zeitliche Abfolge der Startsignale als Referenz einzulernen und im Betrieb durch Vergleich der Abfolge der Startsignale mit der Referenz die jeweils aktive Spiegelfacette (34) zu identifizieren.

8. Polygonscanner (10) nach einem der Ansprüche 5 bis 7,
wobei die Spiegelfacette (34) als Modifikation in einem Anfangsbereich (34a), der das Startsignal erzeugt, eine zu der restlichen Spiegelfacette (34) unterschiedliche Reflexivität und/oder Krümmung aufweist.

9. Polygonscanner (10) nach Anspruch 8,
wobei in dem Anfangsbereich (34a) ein Muster aus Bereichen unterschiedlicher Reflexivität vorgesehen ist.

10. Polygonscanner (10) nach einem der Ansprüche 4 bis 9,
wobei der Winkelbestimmungseinheit (32) ein Tachosignal eines Antriebs zum Drehen der Spiegeleinheit (20) zugeführt ist.

11. Polygonscanner (10) nach einem der vorhergehenden Ansprüche,
wobei die Auswertungseinheit (32) dafür ausgebildet ist, aus dem Empfangssignal mit einem Lichtlaufzeitverfahren eine Entfernung eines angetasteten Objekts (24) zu bestimmen.

12. Polygonscanner (10) nach einem der vorhergehenden Ansprüche,
wobei die Auswertungseinheit (32) dafür ausgebildet ist, die Empfangssignale von unterschiedlichen Spiegelfacetten (34) miteinander zu vergleichen und das Empfangssignal mit der größten Schärfe auszuwerten.

13. Polygonscanner (10) nach einem der vorhergehenden Ansprüche,
der als Barcodescanner ausgebildet ist und dessen Auswertungseinheit (32) einen Barcodedecoder aufweist.

14. Verfahren zum Erfassen von Objekten (24) in einem Überwachungsbereich (22), bei dem ein Lichtstrahl (16) ausgesandt und nach Reflexion an einem Objekt (24) in dem Überwachungsbereich (22) wieder empfangen und ausgewertet wird, wobei ein Winkelbereich des Überwachungsbereiches (22) periodisch abgetastet wird, indem der Lichtstrahl (16) an Spiegelfacetten (34) einer drehbaren Spiegeleinheit (20) mit mehreren Spiegelfacetten (34) abgelenkt wird, wobei der Lichtstrahl (16) in verschiedenen Perioden der Abtastung durch unterschiedliche Krümmungen mindestens einiger der Spiegelfacetten (34) unterschiedlich fokussiert wird,
**dadurch gekennzeichnet,**
**dass** der Lichtstrahl (16) innerhalb einer Abtastperiode durch als Freiform ausgebildete gekrümmte Spiegelfacetten (34) in einer an den während der Drehung der Spiegeleinheit (34) variierenden Einfallswinkel des ausgesandten Lichtstrahls (16) auf der Spiegelfacette (34) angepassten Weise fokussiert wird, so dass für die variierenden Einfallswinkel eine gleiche Fokuslage eingestellt wird.

## Claims

1. A polygon scanner (10) for detecting objects (24) in a monitored area (22), the polygon scanner (10) having a light transmitter (12) for transmitting a light beam (16) into the monitored area (22), a light receiver (30) for receiving the light beam (26) reflected from objects (24) in the monitored area (22), an evaluation unit (32) for evaluating a received signal of the light receiver (30) and a rotatable mirror unit (20) for periodic deflection of the light beam (16), the mirror unit (20) comprising a plurality of mirror facets (34) in order to scan an angular section a plurality of times per revolution of the mirror unit (20) with a respective mirror facet (34) as a monitoring area (22), wherein at least some of the mirror facets (34) have a mutually different curvature,
**characterized in that** at least one of the mirror facets (34) is configured as a free-form surface whose curvature is adapted to the angle of incidence of the transmitted light beam (16) on the mirror facet (34) varying during the rotation of the mirror unit (20) and is curved so that a same focal position is set for the varying angles of incidence.

2. The polygon scanner (10) according to claim 1,
wherein the free-form surface has a tilt from a scanning plane of the light beam (16).

3. The polygon scanner (10) according to one of the preceding claims,
wherein the free-form surface is curved so that the scanning area (40a-b) of the transmitted light beam (16) is straightened.

4. The polygon scanner (10) according to one of the preceding claims, having an angle determination unit (32, 34a, 42) for monitoring the rotational position of the mirror unit (20), and wherein the evaluation unit (32) is configured to identify the respective active mirror facet (34) based on the rotational position.

5. The polygon scanner (10) according to one of the preceding claims, having a start sensor (42) which detects the transmitted light beam (16) at the start of a scan with a respective mirror facet (34),
and wherein a mirror facet (34) has a modification (34a) which enables the mirror facet (34) to be identified from the start signal generated by the transmitted light beam (16) in the start sensor (42),
or wherein a plurality of mirror facets (34) have a modification (34a) that enables identification of the mirror facet (34) from the start signal generated by the transmitted light beam (16) in the start sensor (42), wherein the modifications (34a) of the plurality of mirror facets (34) differ from each other.

6. The polygon scanner (10) according to claim 5,
wherein the mirror facets (34) have a different size as a modification, in particular due to tolerance deviations.

7. The polygon scanner (10) according to claim 6,
wherein the evaluation unit (32) is configured for a teach-in of a time sequence of the start signals as a reference and, in operation, to identify the respective active mirror facet (34) by comparing the sequence of the start signals with the reference.

8. The polygon scanner (10) according to one of claims 5 to 7,
wherein the mirror facet (34) has, as a modification in an initial region (34a) which generates the start signal, a reflectivity and/or curvature which is different from the remaining mirror facet (34).

9. The polygon scanner (10) according to claim 8,
wherein a pattern of areas of different reflectivity is provided in the initial area (34a).

10. The polygon scanner (10) according to one of claims 4 to 9,
wherein the angle determination unit (32) is supplied with a speed signal of a drive for rotating the mirror unit (20).

11. The polygon scanner (10) according to one of the preceding claims,
wherein the evaluation unit (32) is configured to determine a distance of a scanned object (24) from the received signal using a light time-of-flight method.

12. The polygon scanner (10) according to one of the preceding claims,
wherein the evaluation unit (32) is configured to compare the received signals from different mirror facets (34) with one another and to evaluate the received signal having greatest sharpness.

13. The polygon scanner (10) according to one of the preceding claims, which is configured as a barcode scanner and whose evaluation unit (32) has a barcode decoder.

14. A method for detecting objects (24) in a monitoring area (22), wherein a light beam (16) is transmitted and, after reflection on an object (24) in the monitoring area (22), is received again and evaluated, wherein an angular section of the monitoring area (22) is periodically scanned by deflecting the light beam (16) at mirror facets (34) of a rotatable mirror unit (20) having a plurality of mirror facets (34), wherein the light beam (16) is differently focused in different periods of the scanning by different curvatures of at least some of the mirror facets (34),
**characterized in that** the light beam (16) is focused within one scanning period by curved mirror facets (34) formed as free-form surfaces in a manner adapted to the angle of incidence of the transmitted light beam (16) on the mirror facet (34) varying during the rotation of the mirror unit (34), so that a same focus position is set for the varying angles of incidence.

## Revendications

1. Scanner à polygone (10) pour détecter des objets (24) dans une zone à surveiller (22), comportant un émetteur de lumière (12) pour émettre un faisceau lumineux (16) dans la zone à surveiller (22), un récepteur de lumière (30) pour recevoir le faisceau lumineux (26) réfléchi par des objets (24) dans la zone à surveiller (22), une unité d'évaluation (32) pour évaluer un signal reçu du récepteur de lumière (30) et une unité à miroir rotative (20) pour dévier périodiquement le faisceau lumineux (16), qui comporte une pluralité de facettes de miroir (34) afin de balayer une section angulaire à titre de zone à surveiller (22) plusieurs fois par tour de l'unité à miroir (20) au moyen d'une facette de miroir respective (34), au moins certaines des facettes de miroir (34) présentant une courbure différente les unes des autres,
**caractérisé en ce que**
l'une au moins des facettes de miroir (34) est conçue comme une surface de forme libre dont la courbure est adaptée à l'angle d'incidence du faisceau lumineux émis (16) sur la facette de miroir (34), qui varie pendant la rotation de l'unité à miroir (20), et est courbée de telle sorte qu'une position focale identique est réglée pour les angles d'incidence variant.

2. Scanner à polygone (10) selon la revendication 1,
dans lequel la surface de forme libre présente une inclinaison par rapport à un plan de balayage du faisceau lumineux (16).

3. Scanner à polygone (10) selon l'une des revendications précédentes,
dans lequel la surface de forme libre est courbée de telle sorte que la zone de balayage (40a - b) du faisceau lumineux émis (16) est redressée.

4. Scanner à polygone (10) selon l'une des revendications précédentes, comportant une unité de détermination d'angle (32, 34a, 42) pour surveiller la position de rotation de l'unité à miroir (20), l'unité d'évaluation (32) étant conçue pour identifier la facette de miroir (34) respectivement active à l'aide de la position de rotation.

5. Scanner à polygone (10) selon l'une des revendications précédentes, comportant un capteur de démarrage (42) qui, au début de chaque balayage, détecte le faisceau lumineux émis (16) au moyen d'une facette de miroir respective (34), une facette de miroir (34) présentant une modification (34a) qui permet d'identifier la facette de miroir (34) à partir du signal de démarrage que le faisceau lumineux émis (16) génère dans le capteur de démarrage (42), ou plusieurs facettes de miroir (34) présentant une modification (34a) qui permet d'identifier la facette de miroir (34) à partir du signal de démarrage que le faisceau lumineux émis (16) génère dans le capteur de démarrage (42), les modifications (34a) desdites plusieurs facettes de miroir (34) étant différentes les unes des autres.

6. Scanner à polygone (10) selon la revendication 5,
dans lequel les facettes de miroir (34) présentent, à titre de modification, une taille différente, due en particulier à des écarts de tolérance.

7. Scanner à polygone (10) selon la revendication 6,
dans lequel l'unité d'évaluation (32) est conçue pour apprendre comme référence une séquence temporelle des signaux de démarrage et pour identifier la facette de miroir respectivement active (34) pendant le fonctionnement en comparant la séquence des signaux de démarrage avec la référence.

8. Scanner à polygone (10) selon l'une des revendications 5 à 7,
dans lequel dans une zone initiale (34a) qui génère le signal de démarrage, la facette de miroir (34) présente à titre de modification une réflectivité et/ou une courbure différente de celle du reste de la facette de miroir (34).

9. Scanner à polygone (10) selon la revendication 8,
dans lequel un motif de zones de réflectivité différente est prévu dans la zone initiale (34a).

10. Scanner à polygone (10) selon l'une des revendications 4 à 9,
dans lequel l'unité de détermination d'angle (32) reçoit un signal tachymétrique provenant d'un entraînement pour faire tourner l'unité à miroir (20).

11. Scanner à polygone (10) selon l'une des revendications précédentes,
dans lequel l'unité d'évaluation (32) est réalisée pour déterminer une distance d'un objet balayé (24) à partir du signal reçu en utilisant une méthode de temps de parcours de lumière.

12. Scanner à polygone (10) selon l'une des revendications précédentes,
dans lequel l'unité d'évaluation (32) est réalisée pour comparer les signaux reçus de différentes facettes de miroir (34) les uns avec les autres et pour évaluer le signal reçu avec la plus grande netteté.

13. Scanner à polygone (10) selon l'une des revendications précédentes, qui est réalisé sous forme de scanner de codes à barres et dont l'unité d'évaluation (32) présente un décodeur de codes à barres.

14. Procédé pour détecter des objets (24) dans une zone à surveiller (22),
dans lequel
un faisceau lumineux (16) est émis et, après réflexion sur un objet (24) dans la zone à surveiller (22), est reçu et évalué,
une zone angulaire de la zone à surveiller (22) est balayée périodiquement du fait que le faisceau lumineux (16) est dévié sur des facettes de miroir (34) d'une unité à miroir rotative (20) ayant plusieurs facettes de miroir (34), le faisceau lumineux (16) est focalisé différemment dans différentes périodes du balayage en raison des courbures différentes d'au moins certaines des facettes de miroir (34),
**caractérisé en ce que**
le faisceau lumineux (16) est focalisé pendant une période de balayage par des facettes de miroir (34) courbées réalisées en forme libre, d'une manière adaptée à l'angle d'incidence du faisceau lumineux émis (16) sur la facette de miroir (34), qui varie pendant la rotation de l'unité à miroir (34), de sorte qu'une position focale identique est réglée pour les angles d'incidence variant.
